# EUROPEAN PATENT APPLICATION

(11) **EP 3 712 232 A1**
(43) Date of publication of application: **23.09.2020**
(21) Application number: 18879377.2
(22) Date of filing: 14.11.2018
(51) Int. Cl.: C10G 1/10, C10B 53/07, H05B 6/26, F27D 7/06, B29B 17/04

(54) **PLASTIC PYROLYSIS/EMULSIFICATION SYSTEM**

(30) Priority: 14.11.2017 KR 20170151416
(71) Applicant: Jeong, Suk Jin, Goyang-si, Gyeonggi-do 10517 (KR)
(72) Inventor: Jeong, Suk Jin, Goyang-si, Gyeonggi-do 10517 (KR)
(74) Representative: Vossius & Partner Patentanwälte Rechtsanwälte mbB
(86) International application number: PCT/KR2018/013863
(87) International publication number: WO 2019/098658

(57) **Abstract**

The present disclosure relates to a plastic pyrolysis/emulsification system for pyrolyzing waste plastic in a high-temperature/high-vacuum environment, including a transfer portion stably transferring a fixed amount of melts while maintaining a high-vacuum state regardless of the foreign substances in the melt generated during a pyrolysis process, and a vacuum holding portion effectively preventing a vacuum pump from deteriorating by the direct suction of hot oil vapor. The system comprises: an introduction portion; a melting furnace; a first transfer portion; a vacuum pyrolysis furnace; a second transfer portion; a discharge portion; a first condenser; a second condenser; a discharge portion; a first condenser; a second condenser; multiple third condensers; a vacuum pump; and a fourth condenser.

## Description

### [Technical Field]

The present disclosure relates to a plastic pyrolysis/emulsification system which pyrolyzes waste plastic in a high-temperature and high-vacuum environment, and particularly, to a plastic pyrolysis/emulsification system which includes a transfer portion which may stably transfer a fixed amount of melts while maintaining a high-vacuum state regardless of the foreign substances in the melt generated during a pyrolysis process, and a vacuum holding portion which may effectively prevent a vacuum pump from deteriorating by the direct suction of hot oil vapor.

### [Background Art]

Recently, with the rapid industrialization and urbanization of society, various wastes and the generation amount thereof are rapidly increasing, and particularly, the share at which plastic-series incombustible wastes such as vinyl, plastic, rubber, and waste fishing net occupy is rapidly increasing worldwide.

For this reason, countries around the world are actively pursuing efficient treatment methods for these wastes, whereas they are trying their best to decrease air pollution emissions such as contaminants, for example, dioxin (collectively referred to as poly chlorinated dibenzo dioxins (PCDD)-based compounds. The following is the same) accompanied by the treatment of plastic-series incombustible wastes.

In the past, the methods of 'reduction in weight', 'recycling', 'regeneration', 'landfilling', and 'incineration' were mainly used in the treatment of waste, but the 'landfilling' rather than the 'reduction', the 'recycling', and the 'regeneration' which are not final treatment methods causes serious soil and water pollution over a long period of time, and the 'incineration' entails a large amount of soot, dust, and air pollution emissions from incomplete combustion. Particularly, the plastic-series incombustible wastes such as vinyl, plastic, and rubber (hereinafter, referred to as plastics) are the main cause of soil pollution during landfilling and cause serious air pollution during incineration, such that new treatment methods are urgently required.

Accordingly, as part of the recycling of plastics, a method of pyrolyzing the plastics in a high temperature and vacuum environment and condensing the oil vapor generated during the pyrolysis process to obtain pyrolysis oils has been introduced.

For example, Korean Patent Laid-Open Publication No. 2001-66928 discloses a pyrolysis/emulsification method and apparatus of waste plastics which recover pyrolysis oil by condensing the oil vapor obtained during the dry distillation decomposition process of plastics in a pyrolysis furnace, and recover pyrolysis oil from pyrolysis remnant in a vent condenser of an emission gas treatment process again, and Korean Patent Laid-Open Publication No. 2004-22642 discloses a waste plastic pyrolysis oil regeneration apparatus which compresses plastics by a cylinder means before being introduced into a pyrolysis furnace to remove air, thereby preventing self-combustion during indirect heating and recycles pyrolysis remnant as a heat source.

However, these general technologies exhibit some problems, and reviewing two representative examples, first, it is impossible to continuously process plastics and thus the throughput per unit time is largely insufficient, and second, it is difficult to continuously maintain the vacuum state during pyrolysis of plastics, such that not only the treatment efficiency is low but also the process is not smoothly performed due to the sticking of the remnant in the apparatus or the like by self-combustion in many cases.

Briefly reviewing each of the two problems, a typical plastic pyrolysis apparatus selects a so-called batch type in which the wastes may not be introduced continuously during the process due to vacuum maintenance inside the pyrolysis furnace. Accordingly, there are disadvantages in that only a predetermined amount of wastes may be treated in a one-time process, thereby not only consuming the time and the cost but also having the apparatus constraint such as a large scale installation area because a large-sized pyrolysis furnace is required to treat a large amount of wastes.

Further, since the general plastic pyrolysis apparatus removes air by compressing plastic 1 or 2 times before introducing the plastic in many cases, it is difficult to completely remove the air therein, and it is impossible to additionally remove air during the pyrolysis process. Accordingly, it is highly likely that a self-combustion phenomenon occurs due to residual air during the pyrolysis process, such that not only treatment efficiency is degraded by the self-combustion phenomenon but also the remainder by the self-combustion is stuck in the apparatus to disturb the process progress or cause malfunction or failure of the pyrolysis apparatus in many cases.

Accordingly, the present inventor, as a plastic pyrolysis apparatus described in Korean Patent No. 1051314, provides a vacuum pyrolysis apparatus, which includes: an introduction portion having a hopper for introducing plastic, a heating furnace having a burner mounted thereon so as to establish a high-temperature environment therein and having a combustion gas outlet through which combustion gas of the burner is discharged, a melting furnace penetrating the heating furnace such that one end of the melting furnace is connected to the introduction portion, and both ends thereof are exposed to the outside, a transferring/compressing means being mounted in the melting furnace along the longitudinal direction so as to transfer and compress the plastic in one direction, thereby transferring, compressing, and melting the plastic, and the melting furnace having a vapor outlet for discharging water vapor resulting from compression and melting of the plastic provided at one side thereof, a first transfer portion connected to the other end of the melting furnace so as to transfer the melt of the plastic, a vacuum pyrolysis furnace penetrating the heating furnace such that one end of the vacuum pyrolysis furnace is connected to the first transfer portion, and both ends thereof are exposed to the outside, a vacuum pump for establishing vacuum being connected thereto, a transfer means being mounted in the vacuum pyrolysis furnace along the longitudinal direction 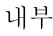 so as to transfer the melt from one end to the other end, thereby transferring and pyrolyzing the melt, a second transfer portion connected to the other end of the vacuum pyrolysis furnace so as to transfer the pyrolysis remnant of plastic, and a discharge portion having one end connected to the second transfer portion to discharge the pyrolysis remnant, whereas as a pyrolysis/emulsification system using the vacuum pyrolysis apparatus, providing a pyrolysis/emulsification system which includes: a 2-1 condenser connected to an oil vapor outlet so as to primarily condense the oil vapor generated in the pyrolysis process to obtain pyrolysis oil, and one or more 2-2 condensers connected to the 2-1 condenser via the vacuum pump to secondarily condense the oil vapor to obtain pyrolysis oil.

However, the vacuum pyrolysis apparatus and the pyrolysis/emulsification system using the same according to Korean Patent No. 1051314 also have several disadvantages in use.

First, the vacuum pyrolysis apparatus has a problem in that the melt is not smoothly transferred from the first and second transfer portions due to foreign substances in the melt or the like.

That is, the plastic introduced into the hopper is properly shredded after stones, metals, woods, and the like are removed but foreign substances still remain, and even in a state where the plastic is hot-melted through the melting furnace and/or the vacuum pyrolysis furnace, the foreign substances continuously remain in a solid state within the melt. As a result, unnecessary trapping or sticking phenomenon was caused by the foreign substances within the melt during the transfer process of the first and second transfer portions, and eventually, it was found that the stable transfer operation of the first and second transfer portions was interrupted, thereby causing a bottleneck phenomenon in the melt or even destroying the vacuum state inside the vacuum pyrolysis apparatus in some cases.

Further, in the case of the pyrolysis/emulsification system, it was shown that hot oil vapor was directly introduced into the vacuum pump to seriously damage the vacuum pump.

That is, the pyrolysis/emulsification system disclosed in Korean Patent No. 1051314 has the 2-1 condenser installed between the oil vapor outlet and the vacuum pump to prevent the hot oil vapor from being directly introduced into the vacuum pump, but it was shown still that the oil vapor which was not sufficiently cooled in the 2-1 condenser was introduced into the vacuum pump, and as a result, there was a problem in that performance of the vacuum pump was degraded or even failure occurred.

### [Disclosure]

### [Technical Problem]

The present disclosure is intended to solve the above problems. That is, an object of the present disclosure is to provide a concrete and realistic method capable of stably transferring a fixed amount of hot melts while maintaining a high vacuum state regardless of the foreign substances inside the melt, and effectively preventing deterioration of the vacuum pump due to the direct suction of hot oil vapor, as a plastic pyrolysis/emulsification system which pyrolyzes plastic in a high-temperate and high-vacuum environment.

### [Technical Solution]

For achieving the object, the present disclosure provides a plastic pyrolysis/emulsification system including: an introduction portion having a hopper for introducing plastic; a heating furnace having a burner mounted thereon so as to establish a high-temperature environment therein and having a combustion gas outlet; a melting furnace penetrating the heating furnace such that one end of the melting furnace is connected to the introduction portion, and both ends thereof are exposed to the outside, a transferring/compressing means being mounted in the melting furnace along the inner longitudinal direction so as to transfer and compress the plastic in one direction, thereby transferring, compressing, and melting the plastic, and the melting furnace having a vapor outlet for discharging water vapor resulting from compression and melting of the plastic; a first transfer portion connected to the other end of the melting furnace so as to transfer the melt of the plastic; a vacuum pyrolysis furnace penetrating the heating furnace such that one end of the vacuum pyrolysis furnace is connected to the first transfer portion, and both ends thereof are exposed to the outside, a transfer means being mounted in the vacuum pyrolysis furnace along the longitudinal direction so as to transfer the melt in one direction, thereby transferring and pyrolyzing the melt, and the vacuum pyrolysis furnace having an oil vapor outlet for discharging oil vapor resulting from transfer and pyrolysis of the melt; a second transfer portion connected to the other end of the vacuum pyrolysis furnace so as to transfer the pyrolysis remnant of the melt; a discharge portion connected to the second transfer portion so as to discharge the pyrolysis remnant; a first condenser connected to the vapor outlet so as to condense the water vapor; a second condenser connected to the oil vapor outlet so as to condense the oil vapor; multiple third condensers connected to the second condenser via first, second, and third valves, respectively; a vacuum pump connected to the multiple third condensers via fourth, fifth, and sixth valves, respectively; and a fourth condenser connected to the vacuum pump, in which the third condensers are sequentially connected to the second condenser in a state where a vacuum is maintained by the vacuum pump in advance to inhale the oil vapor inside the second condenser, whereas the third condensers inhaling the oil vapor are sequentially connected to the vacuum pump to repeatedly perform a process in which the vacuum is maintained again, and the oil vapor inhaled by the vacuum pump is transferred to the fourth condenser.

At this time, in a preferred exemplary embodiment of the present disclosure, at least one of the first transfer portion and the second transfer portion includes: a horizontal cylindrical extruding housing; a cylindrical rotating body embedded along the longitudinal direction of the extruding housing to be eccentrically rotated along an eccentric shaft; and at least one blade mounted along the longitudinal direction of the outer surface of the rotating body so that a height from the outer surface of the rotating body is adjusted by an elastic force to rotate while being in contact with the inner surface of the extruding housing by the eccentric rotation of the rotating body at all times.

Further, in a preferred exemplary embodiment of the present disclosure, at least two sets of the blades facing directions opposite to each other are provided, and the plastic pyrolysis/emulsification system further includes: at least one spring interposed between the blades of each set through the rotating body to exert the elastic force so that the blades of each set are spaced apart from each other.

Further, in a preferred exemplary embodiment of the present disclosure, the plastic pyrolysis/emulsification system further includes: first and second gates installed in parallel on the upper and lower portions of the introduction portion, and each opening and closing the introduction portion separately, in which an operation, in which when the first gate is opened and the plastic is introduced, the first gate is closed and the second gate is opened to transfer the plastic to the melting furnace, is repeatedly performed.

### [Advantageous Effects]

The plastic pyrolysis/emulsification system according to the present disclosure may completely pyrolyzes the plastic in the high-temperature and high-vacuum environment through the transfer portion which may stably transfer a fixed amount of hot melts while maintaining the high-vacuum state regardless of the foreign substances inside the melt, and the vacuum holding portion which may effectively prevent the vacuum pump from deteriorating by the direct suction of the hot oil vapor.

### [Description of Drawings]

FIG. 1 is a schematic diagram illustrating a vacuum pyrolysis apparatus of a pyrolysis/emulsification system according to the present disclosure.
FIG. 2 is a schematic diagram illustrating an introduction portion of the vacuum pyrolysis apparatus of the pyrolysis/emulsification system according to the present disclosure.
FIG. 3 is a schematic diagram illustrating a melting furnace of the vacuum pyrolysis apparatus of the pyrolysis/emulsification system according to the present disclosure.
FIGS. 4 and 5 are each schematic diagrams illustrating a transfer portion of the vacuum pyrolysis apparatus of the pyrolysis/emulsification system according to the present disclosure.
FIG. 6 is a schematic diagram illustrating a vacuum pyrolysis furnace of the vacuum pyrolysis apparatus of the pyrolysis/emulsification system according to the present disclosure.
FIG. 7 is a schematic diagram of the pyrolysis/emulsification system according to the present disclosure.

### [Best Mode]

Hereinafter, the present disclosure will be described in detail through a preferred exemplary embodiment of the present disclosure.

The advantages and features disclosed below and the method for achieving them will become apparent with reference to the exemplary embodiments described later in detail in conjunction with the accompanying drawings. However, the present disclosure is not limited to the exemplary embodiments disclosed below but may be implemented in various different forms, and since the present exemplary embodiment is only to complete the disclosure of the present disclosure and at the same time, to completely inform those skilled in the art to which the present disclosure pertains of the scope of the disclosure, the present disclosure is defined by only the scope of the claims.

Further, the terms used herein is only used to describe a specific exemplary embodiment and not intended to limit the present disclosure. For example, a component expressed as a singular should be understood as a concept including a plurality of components unless the context clearly refers to the singular. Further, in the specification of the present disclosure, terms such as 'include' or 'have' are only intended to designate that features, numbers, steps, operations, components, parts, or combinations thereof described in the specification exist, and the use of these terms does not preclude the existence or additional possibility of one or more other features, numbers, steps, operations, components, parts, or combinations thereof. Further, in the exemplary embodiment described in this specification, 'module' or 'part' may mean a functional part performing at least one function or operation.

Further, unless defined otherwise, all terms used herein, including technical or scientific terms, have the same meaning as commonly understood by those skilled in the art to which the present disclosure pertains. Terms such as those defined in the commonly used dictionaries should be interpreted as having meanings consistent with the meanings in the context of related technologies, and are not construed as being ideal or excessively formal meanings unless explicitly defined in the specification of the present disclosure.

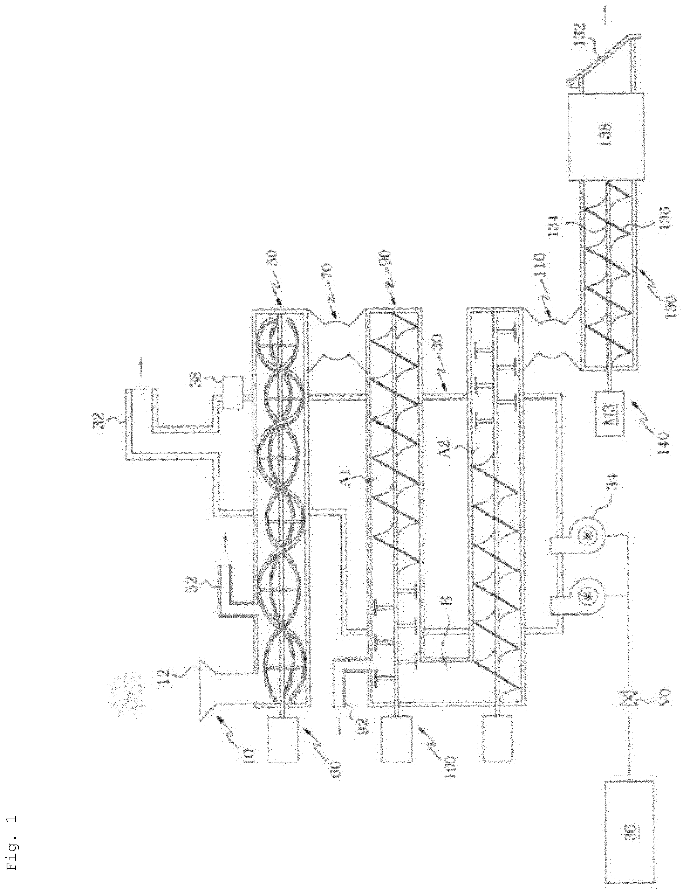

FIG. 1 is a schematic diagram illustrating a pyrolysis apparatus as a portion of a plastic pyrolysis/emulsification system according to the present disclosure.

As illustrated in FIG. 1, the pyrolysis apparatus according to the present disclosure includes: an introduction part 10 into which plastic is introduced, a melting furnace 50 which has one end connected to the introduction portion 10, a transferring/compressing means 60 which is installed along the longitudinal direction inside the melting furnace 50 to transfer and compress the plastic in one direction, a first transfer portion 70 which is connected to the other end of the melting furnace 50, a vacuum pyrolysis furnace 90 which has one end connected to the first transfer portion 70, a transfer means 100 which is installed along the longitudinal direction inside the vacuum pyrolysis furnace 90 to transfer the plastic in one direction, a second transfer portion 110 which is connected to the other end of the vacuum pyrolysis furnace 90, a discharge portion 130 which has one end connected to the second transfer portion 110, and a heating furnace 30 which accommodates portions of the melting furnace 50 and the vacuum pyrolysis furnace 90 while exposing the introduction portion 10, the first transfer portion 70, the second transfer portion 110, and the discharge portion 130 to the outside.

The introduction portion 10 includes a hopper 12 into which plastic is introduced, and the plastic introduced into the hopper 12 may be in a state of having undergone at least once, preferably, two or more shredding processes and impurity removing processes during the process of being transferred to the hopper 12 through a conveyor belt (not illustrated). At this time, the plastic introduced into the introduction portion 10 is preferably limited to a predetermined amount per hour, thereby preventing malfunction due to the excessive introduction of plastic.

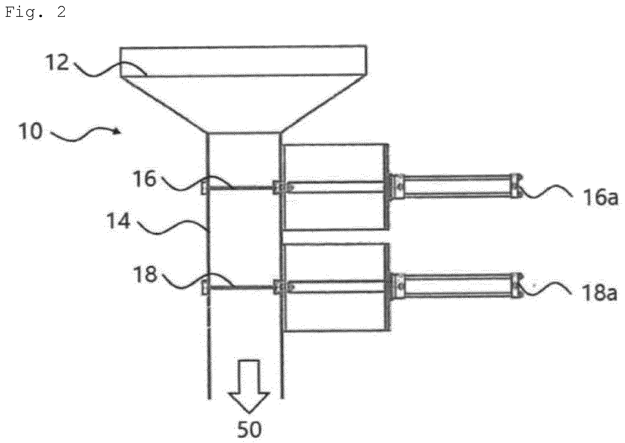

FIG. 2 is a schematic diagram of the introduction portion 10 of the vacuum pyrolysis apparatus according to the present disclosure. The introduction portion 10 will be described with reference to FIGS. 1 and 2.

As illustrated in FIG. 2, the introduction portion 10 includes a hopper 12 whose upper surface is opened so that plastic is introduced, and a vertical connecting pipe 14 which connects the hopper 12 with the melting furnace 50, and the first and second gates 16, 18 are installed in parallel on the upper portion and the lower portion of the connecting pipe 12. At this time, the first and second gates 16, 18 may perform a vertical reciprocating motion separately by first and second cylinders, thereby separately opening and closing the connecting pipe 14, respectively.

The first and second gates 16, 18 consecutively transfer a certain amount of plastics introduced into the hopper 12 to the melting furnace 50 through a series of operations, whereas blocking the introduction of unnecessary outside air during the transfer process to maintain the vacuum environment inside the pyrolysis apparatus below the melting furnace 50, and reviewing the above sequentially, first, when plastic is introduced through the hopper 12, the first gate 16 is opened in a state where the second gate 18 is closed to introduce the plastic into the connecting pipe 14 between the first and second gates 16, 18. Subsequently, when a proper amount of plastics are introduced, the first gate 16 is closed to block the introduction of the outside air and the second gate 18 is opened to transfer the plastic to the melting furnace 50. Further, the second gate 18 is closed again and the first gate 16 is opened to receive the new plastic.

The first and second gates 16, 18 transfer a certain amount of plastics to the melting furnace 50 while repeating such an operation, and block the introduction of the unnecessary outside air during this process.

Referring back to FIG. 1, at least one burner 34 is mounted at the bottom of the heating furnace 30 to provide a flame inside the heating furnace 30, thereby establishing a high-temperature environment inside the heating furnace 30. Further, a combustion gas outlet 32 for discharging combustion gas due to combustion of the burner 34 is provided at the upper portion of one side of the heating furnace 30. At this time, the burner 34 receives fuel from a separate fuel supply device 36, and a valve V for adjusting the amount of fuel supply may be installed between the fuel supply device 36 and the burner 34.

Further, an air inlet 38 capable of adjusting the introduction amount of outside air is provided at the upper portion of one side of the heating furnace 30 to adjust a temperature inside the heating furnace 30.

The melting furnace 50 is a portion which compresses and melts the plastic transferred from the introduction portion 10 to transfer the compressed and melted plastic to the first transfer portion 70, and for example, represents a cylindrical shape in the horizontal direction or a tank shape similar thereto. Preferably, the melting furnace 50 penetrates the combustion gas outlet 32 side, that is, the upper end of the heating furnace 30 so that one end and the other end are exposed to the outside of the heating furnace 30 in a state where one end thereof is connected to the introduction portion 10, the transferring/compressing means 60 for transferring and compressing the plastic in one direction is installed along the longitudinal direction inside the melting furnace 50, and a vapor outlet 52 for discharging water vapor or the like generated during the compression and melting of the plastic is provided at the upper end of one side of the melting furnace 50 exposed to the outside of the heating furnace 30.

Accordingly, the plastic transferred to the melting furnace 50 through the introduction portion 10 is melted by the high temperature of the heating furnace 30 during the process of being transferred and compressed from one end to the other end of the melting furnace 50 by the transferring/compressing means 60 to be transferred to the first transfer portion 70 in the form of the melt, and the water vapor or the like generated during this process is discharged through the vapor outlet 52. At this time, particularly, the melting furnace 50 traverses the upper end of the relatively hot heating furnace 30, thereby increasing a melting rate of the plastic.

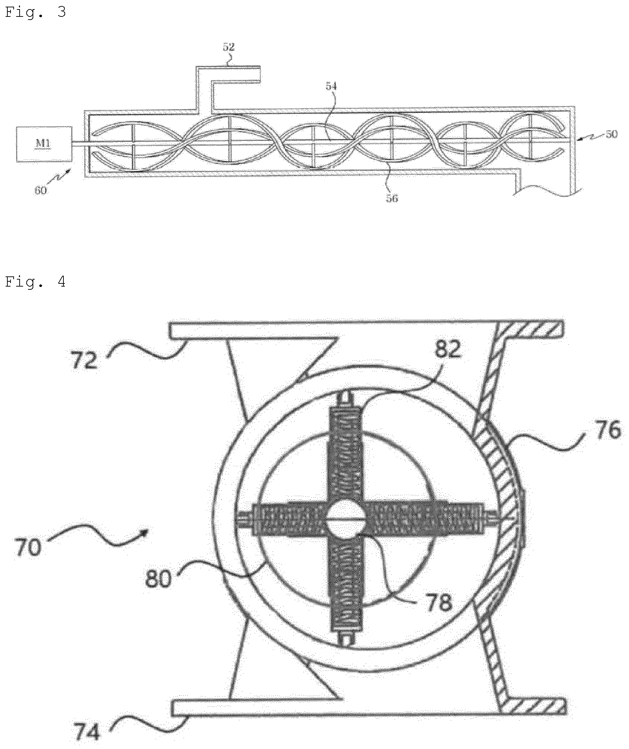

FIG. 3 is a schematic diagram illustrating the internal structure of the melting furnace 50 of the pyrolysis apparatus according to the present disclosure. The internal structure of the melting furnace 50 will be described with reference to FIGS. 1 and 3.

As illustrated in FIG. 3, the transferring/compressing means 60 is installed along the longitudinal direction inside the melting furnace 50 to transfer and compress the plastic in one direction. The transferring/compressing means 60 includes a first rotary shaft 54 which penetrates the interior of the melting furnace 50 in the longitudinal direction, a first motor M1 which rotates the first rotary shaft 54 from the outside of the melting furnace 50, and a plurality of spiral blades 56 which are spirally surrounded along the first rotary shaft 54 inside the melting furnace 50. Further, preferably, the plurality of spiral blades 56 decreases in a pitch interval from one end toward the other end of the melting furnace 50. As a result, the plastic transferred to the melting furnace 50 is compressed by the pitch interval of the spiral blade 56 during the process of being transferred from one end to the other end of the melting furnace 50 and at the same time, is melted by the high temperature of the heating furnace 30, and the plastic is divided into a moisture material and an oily material and the moisture material is discharged through the vapor outlet 52 in the form of water vapor whereas the oily material is transferred to the first transfer portion 70 in the form of the melt.

Referring back to FIG. 1, the first transfer portion 70 transfers the compressed and molten melt to the vacuum pyrolysis furnace 90 during the process of passing through the melting furnace 50.

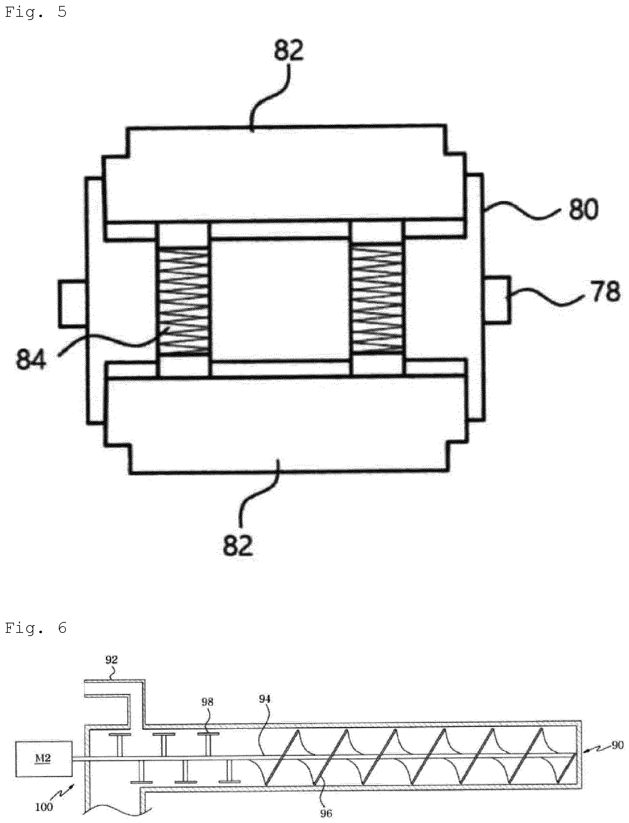

At this time, particularly, the first transfer portion 70 may stably transfer a fixed amount of hot melts while maintaining a high-vacuum state regardless of foreign substances inside the melt, and FIGS. 4 and 5 are each drawings for explaining the first transfer portion 70. The first transfer portion 70 will be described with reference to FIGS. 1, 4, and 5.

As illustrated in FIGS. 4 and 5, the first transfer portion 70 connects the other end of the melting furnace 50 with one end of the vacuum pyrolysis furnace 90 to transfer the melt of the melting furnace 50 to the vacuum pyrolysis furnace 90. To this end, the first transfer portion 70 includes a first flange 72 which is connected to the melting furnace 50, a second flange 74 which is connected to the vacuum pyrolysis furnace 90, a horizontal cylindrical extruding housing 76 which connects the first and second flanges 72, 74, and a cylindrical rotating body 80 which is installed rotatably along an eccentric shaft 78 at an eccentric location from the center thereof in a state of being embedded along the longitudinal direction of the extruding housing 76 and eccentrically rotates while being in line contact with the inner surface of the extruding housing 76 at all times.

At this time, the first flange 72, the extruding housing 76, and the second flange 74 are disposed in a straight line at the upper and lower portions thereof, and the rotating body 80 is provided with at least one blade 82 which protrudes along the longitudinal direction of the outer surface thereof, and enables adjustment of the protrusion level thereof, that is, the height from the rotating body 80 to rotate while being in close contact with the inner surface of the extruding housing 76 at all times.

FIG. 5 is a diagram illustrating a cross section of the rotating body 80, and as illustrated, the rotating body 80 includes at least one blade 82 protruding along the longitudinal direction of the outer surface thereof. At this time, two or more sets of the blades 82 are disposed radially at equal intervals, one set forming a pair of upper and lower blades, and at least one spring 84 which exerts an elastic force so that the blades 82 of each set are spaced apart from each other is interposed between the blades 82 of each set through the rotating body 80. Accordingly, the blades 82 of each set are pushed in the direction where they are spaced apart from each other to rotate along the eccentric rotation of the rotating body 80 while being in close contact with the inner surface of the extruding housing 76 at all times, and even if foreign substances or the like inside the melt are caught, the height of the blade 82 may be adjusted by the elastic force of the spring 84 to allow the foreign substances to pass through the blade 82.

For reference, since a driving source such as a motor for rotating the eccentric shaft 78 is omitted, this may also be applied with the general technical spirit and thus may be easily understood even without a separate drawing or description.

As a result, the first transfer portion 70 transfers the melt of the melting furnace 50 to the vacuum pyrolysis furnace 90 through the eccentric rotation of the rotating body 80, and particularly, the blade 82 of the rotating body 80 is in contact with the inner surface of the extruding housing 76 at all times, and if foreign substances or the like are caught, it is possible to pass through the foreign substances with the elastic force of the spring 84, thereby stably transferring a fixed amount of hot melts while maintaining a high-vacuum state regardless of the foreign substances inside the melt.

Further, the second transfer portion 110 may have the same structure as the first transfer portion 70, and as a result, substantially the same operation may be expected. The first and second transfer portions 70, 110 may be collectively referred to as transfer portions.

Referring back to FIG. 1, the vacuum pyrolysis furnace 90 is a portion which pyrolyzes the melt transferred from the first transfer portion 70 to transfer the pyrolyzed melt to the second transfer portion 110, preferably has a horizontal cylindrical shape or a tank shape similar thereto, and penetrates the heating furnace 30 so that one end and the other end are exposed to the outside of the heating furnace 30 in a state where one end thereof is connected to the first transfer portion 70. Further, the transfer means 100 for one-way transfer of the plastic is installed along the longitudinal direction inside the vacuum pyrolysis furnace 90, and an oil vapor outlet 92 for continuously discharging the oil vapor generated during the pyrolysis process of the melt to establish and maintain vacuum inside the vacuum pyrolysis furnace 90 is provided at the upper end of one side of the vacuum pyrolysis furnace 90 exposed to the outside of the heating furnace 30.

At this time, to enhance pyrolysis efficiency of the vacuum pyrolysis furnace 90, two or more horizontal cylindrical tanks are connected in a zigzag form or a form similar thereto to define two or more horizontal sections A1, A2 and one or more vertical sections B connecting them, and the second transfer means 100 may also be installed along the longitudinal direction inside each horizontal section A1, A2. That is, the vacuum pyrolysis furnace 90 illustrated in the drawing defines a first horizontal section A1 which has one end connected to the first transfer portion 70, a first vertical section A1 which is connected to the other end of the first horizontal section A1, and a second horizontal section A2 which has one end connected to the first vertical section B to be parallel to the lower end of the first horizontal section A1, and the transfer means 100 for one-way transfer of the plastic are installed on the lower ends of the first and second horizontal sections A1, A2, respectively to take the transfer directions opposite to each other, such that the melt transferred from the first transfer portion 70 is transferred to the second transfer portion 100 via the first horizontal section A1, the first vertical section B, and the second horizontal section A2.

As a result, the melt transferred to the vacuum pyrolysis furnace 90 through the first transfer portion 70 is pyrolyzed by the high temperature of the heating furnace 30 while being transferred by the transfer means 100, and since the interior of the vacuum pyrolysis furnace 90 is continuously exhausted through the oil vapor outlet 92 to establish and maintain a constant vacuum, the melt is pyrolyzed without the self-combustion phenomenon.

FIG. 6 is a diagram illustrating the first horizontal section A1 as a portion of the vacuum pyrolysis furnace 90 for convenience.

As illustrated in FIG. 6, the transfer means 100 is installed along the longitudinal direction inside the vacuum pyrolysis furnace 90 to transfer the melt in one direction. To this end, the transfer means 100 includes a second rotary shaft 94 which penetrates the interior of the vacuum pyrolysis furnace 90 in the longitudinal direction, a second motor M2 which rotates the second rotary shaft 94 from the outside of the vacuum pyrolysis furnace 90, and a first screw 96 which is spirally surrounded along the second rotary shaft 94 inside the vacuum pyrolysis furnace 90. At this time, preferably, a plurality of paddles 98 for stirring the melt or the pyrolysis remnant in addition to the first screw 96 may be attached to different locations of the second rotary shaft 94, and the number, arrangement order, and the like of the first screw 96 and the paddles 98may be adjusted appropriately.

As a result, the melt transferred to the vacuum pyrolysis furnace 90 is pyrolyzed during the process of being transferred in one direction by the transfer means 100 and the remnant which is not pyrolyzed is transferred to the second transfer portion 110, and the oil vapor generated during this process is continuously discharged through the oil vapor outlet 92 provided at one side of the vacuum pyrolysis furnace 90 and the vacuum pump 180 connected thereto.

Referring back to FIG. 1, a discharge portion 130 is connected to the other end of the vacuum pyrolysis furnace 90 via the second transfer portion 110. At this time, the second transfer portion 110 has the substantially same configuration and operation as those of the first transfer portion 70 but transfers the pyrolysis remnant of the vacuum pyrolysis furnace 90 rather than the melt of the melting furnace 50 to the discharge portion 130, and the discharge portion 130 finally compresses the pyrolysis remnant to discharge the compressed pyrolysis remnant to the outside.

The discharge portion 130 has a horizontal cylindrical tank shape or a shape similar thereto with one end connected to the second transfer portion 110 and the other end closed with a cap 132 which may be opened and closed, and preferably, is installed with a discharge mean 140 for transferring pyrolysis remnant in one direction along the inner longitudinal direction.

At this time, the discharge means 140 includes a third rotary shaft 134 which penetrates the interior of the discharge portion 130 in the longitudinal direction, a third motor M3 which rotates the third rotary shaft 134 from the outside of the discharge portion 130, and a second screw 136 which is spirally surrounded along the third rotary shaft 134 inside the discharge portion 130 which are substantially the same as those of the transfer means 100 described above. Further, the other end of the discharge portion 130 is closed with the cap 132, the cap 132 may be equipped with a weight Ø or the like to open the other end of the discharge portion 130 only by a certain discharge pressure or more, and as a result, the final pyrolysis remnant is discharged to the outside by a certain weight through the discharge portion 130.

Particularly, a cooling device 138 in which coolant or the like is circulated is attached along some or all outer surfaces of the discharge portion 130, thereby rapidly cooling the discharge portion 130 and the final discharged pyrolysis remnant.

As a result, the plastic introduced into the hopper 12 of the introduction portion 10 is transferred to the melting furnace 50, and the plastic in the melting furnace 50 is melted by the high temperature of the heating furnace 30 during the process of being transferred and compressed in one direction by the transferring/compressing means 60 and water vapor or the like is discharged to the vapor outlet 52, whereas the melt is transferred to the vacuum pyrolysis furnace 90 through the first transfer portion 70, the melt in the vacuum pyrolysis furnace 90 is pyrolyzed by the vacuum inside the vacuum pyrolysis furnace 90 and the high temperature of the heating furnace 30 during the process of being transferred by the transfer means 100 in one direction and the oil vapor or the like is discharged through the oil vapor outlet 92, and the final pyrolysis remnant is transferred to the discharge portion 130 through the second transfer portion 110 to be discharged to the outside.

Meanwhile, the vacuum pyrolysis apparatus described above may continuously supply and pyrolyze the plastic and effectively prevent the sticking of the melt or the pyrolysis remnant in the apparatus while removing substantially all amounts of air or moisture contained in the plastic. Here, the present disclosure further provides a pyrolysis/emulsification system which may obtain a larger amount of pyrolysis oil per unit time using the vacuum pyrolysis apparatus described above.

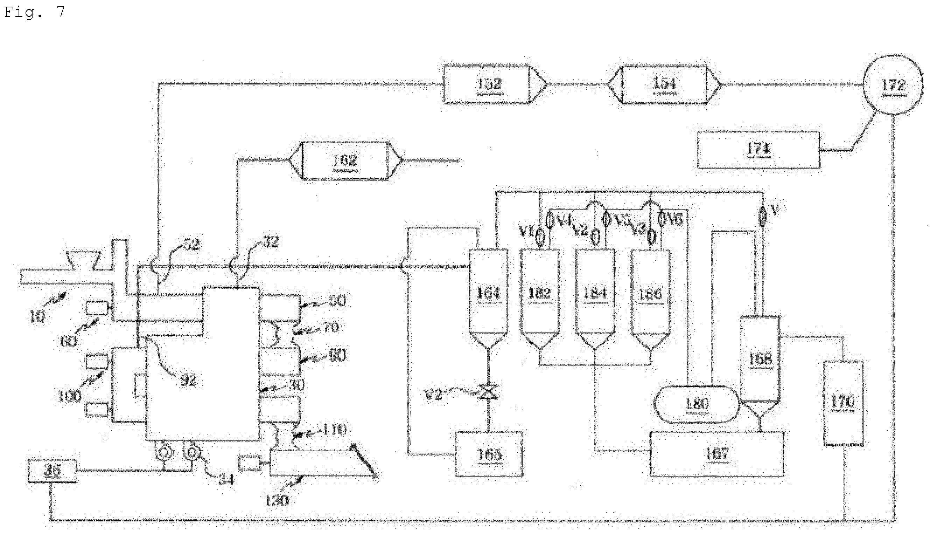

FIG. 7 is a structural diagram illustrating a pyrolysis/emulsification system according to the present disclosure. For reference, in the drawing, the necessary portions of the vacuum pyrolysis apparatus are mainly illustrated in brief, and reference numerals which are unnecessary for explanation are omitted.

As illustrated in FIG. 7, the pyrolysis/emulsification system according to the present disclosure includes a first condenser 152 and a water purifier 154 which are sequentially connected to the vapor outlet 52 of the melting furnace 50, an air purifier 162 which is connected to the combustion gas outlet 32 of the heating furnace 30, a second condenser 164 which is connected to the oil vapor outlet 92 of the vacuum pyrolysis furnace 90, at least one third condenser 182, 184, 186, a vacuum pump 180, and a fourth condenser 168. For reference, since general contents may be applied to the detailed configuration of the condenser, the purifiers, the vacuum pump, and the like, the detailed descriptions will be omitted and each role is mainly explained.

The first condenser 152 is connected to the vapor outlet 52 of the melting furnace 50 to condense the water vapor generated during the compressing and melting processes of the plastic into liquid water, and the water purifier 154 is connected to the first condenser 152 to purify the condensed water. Further, preferably, unnecessary gas components which have passed through the first condenser 152 and the water purifier 154 are cooled through a cooler 172 and then supplied to the fuel supply device 36 to be recycled as fuel of the burner 34. For reference, reference numeral 174 denotes a coolant storage tank 174 which stores the coolant supplied to the cooler 172.

The air purifier 162 is connected to the combustion gas outlet 32 of the heating furnace 30 to purify the combustion gas generated during the combustion process of the burner 34 to discharge the purified combustion gas to the outside. For reference, the combustion gas discharged from the heating furnace 30 is mostly carbon dioxide and water vapor by substantially complete combustion, and the air purifier 162 removes a small amount of carbon monoxide and the like.

The second condenser 164, the at least one third condenser 182, 184, 186, the vacuum pump 180, and the fourth condenser 168 are connected to the oil vapor outlet 92 of the vacuum pyrolysis furnace 90. The second condenser 164, the at least one third condenser 182, 184, 186, the vacuum pump 180, and the fourth condenser 168 are collectively referred to as a vacuum holding portion.

At this time, preferably, the number of third condensers 182, 184, 186 may be two or more, appropriately, three, each of which is connected to the second condenser 164 via first to third valves V1, V2, V3, and these third condensers 182, 184, 186 are each connected to the vacuum pump 180 via fourth to sixth valves V4, V5, V6. Further, preferably, the second condenser 164 and the fourth condenser 168 may be directly connected via a safety valve V, the fourth condenser 168 is directly connected to the vacuum pump 180, and the second, third, and fourth condensers 164, 182, 184, 186 are appropriately connected to first and second pyrolysis oil tanks 165, 167.

At this time, the second, third, and fourth condensers 164, 182, 184, 186 each intake and condense the oil vapor discharged from the oil vapor outlet 92 to appropriately maintain the degree of vacuum inside the vacuum pyrolysis furnace 90, whereas as a portion of obtaining pyrolysis oil by condensing the intake oil vapor, particularly, according to the present disclosure, at least one third condenser 182, 184, 186 is connected between the second condenser 164 and the vacuum pump 180 and the hot oil vapor of the second condenser 164 is directly introduced into the vacuum pump 180 to prevent a phenomenon in which the vacuum pump 180 is damaged, such that the vacuum inside the third condensers 182, 184, 186 is maintained by the vacuum pump 180, and the third condensers 182, 184, 186 are connected to the second condenser 164 sequentially or by a constant rule and serve to inhale the oil vapor inside the second condenser 164 to condense and cool the oil vapor again and then transfer the oil vapor to the fourth condenser 168 through the vacuum pump 180.

More specifically, before the plastic is introduced into the melting furnace 50 to be compressed and melted or while the compressing and melting processes are performed, the first to sixth valves V1 to V6 are all opened and the vacuum pump 180 is driven to establish vacuum inside the second to third condensers 164, 182, 184, 186 in addition to the vacuum pyrolysis furnace 90. Further, when the desired degree of vacuum is established inside the vacuum pyrolysis furnace 90 and the second to third condensers 164, 182, 184, 186, all of the first to sixth valves V1 to V6 are closed.

During this process, a melt is generated inside the melting furnace 50, and when the viscosity of the melt becomes a certain level or less, the melt is introduced into the vacuum pyrolysis furnace 90 by the first transfer portion 70, and the melt is pyrolyzed inside the vacuum pyrolysis furnace 90 to generate the oil vapor. Further, the oil vapor inside the vacuum pyrolysis furnace 90 is transferred to the second condenser 164 and condensed and then the regenerated oil is transferred to the first and second pyrolysis oil tanks 165, 167.

Subsequently, when the internal pressures of the vacuum pyrolysis furnace 90 and the second condenser 164 are a reference value or more, the first valve V1 is opened and the oil vapor inside the second condenser 164 is instantaneously introduced into a 3-1 condenser 182 which is one of the third condensers 182, 184, 186 arbitrarily. As a result, the interior of the vacuum pyrolysis furnace 90 still maintains a vacuum of a reference value or less, and the oil vapor introduced into the second condenser 164 and the 3-1 condenser 182 is condensed and then the regenerated oil is transferred to the first and second pyrolysis oil tanks 165, 167.

Subsequently, when the vacuum degrees of the vacuum pyrolysis furnace 90, the second condenser 164, and the 3-1 condenser 182 are similar, the first valve V1 is closed and the second valve V2 is opened and thus the oil vapor inside the second condenser 164 is instantaneously introduced to a 3-2 condenser 184 which is another one of the third condensers 182, 184, 186 arbitrarily. As a result, the interior of the vacuum pyrolysis furnace 90 still maintains a vacuum of the reference value or less, and the oil vapor introduced into the second condenser 164 and the 3-2 condenser 184 is condensed and then the regenerated oil is transferred to the first and second pyrolysis oil tanks 165, 167. Further, preferably, when the interior of the 3-1 condenser 182 is sufficiently cooled, the fourth valve V4 is opened and a vacuum is established inside the 3-1 condenser 182 by the vacuum pump 180, and the oil vapor inhaled by the vacuum pump 180 is transferred to the fourth condenser 168.

Subsequently, when the degrees of vacuum of the vacuum pyrolysis furnace 90, the second condenser 164, and the 3-2 condenser 184 are similar, the second valve V2 is closed and the third valve V3 is opened and thus the oil vapor inside the second condenser 164 is instantaneously introduced into a 3-3 condenser 186 which is the other one of the third condensers 182, 184, 186 arbitrarily. As a result, the interior of the vacuum pyrolysis furnace 90 still maintains a vacuum of the reference value or less, and the oil vapor introduced into the second condenser 164 and the 3-3 condenser 186 is condensed and then the regenerated oil is transferred to the first and second pyrolysis oil tanks 165, 167. Further, preferably, when the interior of the 3-2 condenser 184 is sufficiently cooled, the fifth valve V5 is opened and a vacuum is established inside the 3-2 condenser 184, and the oil vapor inhaled by the vacuum pump 180 is transferred to the fourth condenser 168.

Meanwhile, the above process is sequentially repeated as many as the number of the third condensers 182, 184, 186, and as a result, the interior of the vacuum pyrolysis furnace 90 is pyrolyzed while maintaining the vacuum of the reference value or less. Further, during this process, since the vacuum pump 180 inhales only sufficiently condensed and cooled oil vapor, there is no concern of damage. Further, since the oil vapor condensed in the fourth condenser 168 is a gas component in which substantially all of the regenerated oil is removed, the oil vapor is stored in the gas storage tank 170 and then supplied to the fuel supply device 36 to be reused as fuel for the burner 34.

At this time, preferably, a pipeline which connects the second condenser 164 with the fourth condenser 168 may be provided with the safety valve V which opens the corresponding pipeline with respect to a pressure exceeding the reference value, and when an abnormal pressure is detected inside the vacuum pyrolysis furnace 90, the safety valve V opens the corresponding pipeline. As a result, the oil vapor inside the second condenser 164 may be directly introduced into the fourth condenser 168, thereby quickly lowering the internal pressure of the vacuum pyrolysis furnace 90.

The above description and drawings are merely examples of the present disclosure and do not limit the present disclosure. That is, the present disclosure may be modified variously but when these modifications are within the technical scope of the present disclosure, they should be included in the scope of the present disclosure, such that the scope of the present disclosure is required to be construed by the claims or equivalent thereof.

**[Industrial Applicability]**

## Claims

1. A plastic pyrolysis/emulsification system comprising:
an introduction portion 10 having a hopper 12 for introducing plastic;
a heating furnace 30 having a burner 34 mounted thereon so as to establish a high-temperature environment therein and having a combustion gas outlet 32;
a melting furnace 50 penetrating the heating furnace 30 such that one end of the melting furnace 50 is connected to the introduction portion 10, and both ends thereof are exposed to the outside, a transferring/compressing means 60 being mounted in the melting furnace 50 along the inner longitudinal direction so as to transfer and compress the plastic in one direction, thereby transferring, compressing, and melting the plastic, and the melting furnace 50 having a vapor outlet 52 for discharging water vapor resulting from compression and melting of the plastic;
a first transfer portion 70 connected to the other end of the melting furnace 50 so as to transfer the melt of the plastic;
a vacuum pyrolysis furnace 90 penetrating the heating furnace 30 such that one end of the vacuum pyrolysis furnace 90 is connected to the first transfer portion 70, and both ends thereof are exposed to the outside, a transfer means 100 being mounted in the vacuum pyrolysis furnace 90 along the inner longitudinal direction so as to transfer the melt in one direction, thereby transferring and pyrolyzing the melt, and the vacuum pyrolysis furnace 90 having an oil vapor outlet 92 for discharging oil vapor resulting from transfer and pyrolysis of the melt;
a second transfer portion 110 connected to the other end of the vacuum pyrolysis furnace 90 so as to transfer the pyrolysis remnant of the melt;
a discharge portion 130 connected to the second transfer portion 110 so as to discharge the pyrolysis remnant;
a first condenser 152 connected to the vapor outlet 52 so as to condense the water vapor;
a second condenser 164 connected to the oil vapor outlet 92 so as to condense the oil vapor;
multiple third condensers 182, 184, 186 connected to the second condenser 162 via first, second, and third valves V1, V2, V3, respectively;
a vacuum pump 180 connected to the multiple third condensers 182, 184, 186 via fourth, fifth, and sixth valves V4, V5, V6, respectively; and
a fourth condenser 168 connected to the vacuum pump 180,
wherein the third condensers 182, 184, 186 are sequentially connected to the second condenser 164 in a state where a vacuum is maintained by the vacuum pump 180 in advance to inhale the oil vapor inside the second condenser 164, whereas the third condensers 182, 184, 186 inhaling the oil vapor are sequentially connected to the vacuum pump to repeatedly perform a process in which the vacuum is maintained again, and the oil vapor inhaled by the vacuum pump is transferred to the fourth condenser 168,
wherein at least one of the first transfer portion 70 and the second transfer portion 110 comprises:
a horizontal cylindrical extruding housing 76;
a cylindrical rotating body 80 embedded along the longitudinal direction of the extruding housing 76 to be eccentrically rotated along an eccentric shaft 78;
at least one blade 82 mounted along the longitudinal direction of the outer surface of the rotating body 80 so that a height from the outer surface of the rotating body 80 is adjusted by an elastic force to rotate while being in contact with the inner surface of the extruding housing 76 by the eccentric rotation of the rotating body 80 at all times,
wherein at least two sets of the blades 82 facing directions opposite to each other are provided, and
wherein the plastic pyrolysis/emulsification system further comprises: at least one spring 84 interposed between the blades 82 of each set through the rotating body 80 to exert the elastic force so that the blades 82 of each set are spaced apart from each other.

2. The plastic pyrolysis/emulsification system of claim 1, further comprising:
first and second gates 16, 18 installed in parallel on the upper and lower portions of the introduction portion 10, and each opening and closing the introduction portion 10 separately,
wherein an operation, in which when the first gate 16 is opened and the plastic is introduced, the first gate 16 is closed and the second gate 18 is opened to transfer the plastic to the melting furnace 50, is repeatedly performed.
